# EUROPEAN PATENT APPLICATION

(11) **EP 1 761 010 A2**
(43) Date of publication of application: **07.03.2007**
(21) Application number: 06018231.8
(22) Date of filing: 31.08.2006
(51) Int. Cl.: H04M 1/725

(54) **Apparatus and method for controlling stand-alone mode of mobile terminal**

(30) Priority: 01.09.2005 KR 20050081354
(71) Applicant: LG Electronics Inc., Yongdungpo-gu Seoul (KR)
(72) Inventor: Kim, Jeong-Ho, Seoul (KR)
(74) Representative: TER MEER - STEINMEISTER & PARTNER GbR

(57) **Abstract**

An apparatus and method for controlling a stand-alone mode of a mobile terminal is provided. When the mobile terminal is turned on, the controller switches the mobile terminal to the stand-alone mode using a stored control signal. A stand-alone mode of a mobile terminal can be continuously maintained even when a battery of the mobile terminal replaced by a user after the mobile terminal is switched to the stand-alone mode.

## Description

### CROSS-REFERENCE TO RELATED APPLICATIONS

Pursuant to 35 U.S.C. § 119(a), this application claims the benefit of earlier filing date and right of priority to Korean Application No. 81354/2005 filed on September 1, 2005, the content of which is hereby incorporated by reference herein in its entirety.

### FIELD OF THE INVENTION

The present invention relates to a mobile terminal and, more particularly, to an apparatus and method for controlling a stand-alone mode, or airplane mode, of a mobile terminal.

### DESCRIPTION OF THE RELATED ART

Recently, a stand-alone mode is applied for a mobile terminal such as a mobile phone to increase user convenience. The stand-alone mode is a mode in which when a user must turn off a mobile terminal, such as when the user is on board an airplane or when the user does not want to receive a call, the user can cut off only a call signal of the mobile terminal. In other words, the mobile terminal does not perform a transmission/reception operation in a deep sleep state, whereby the user can normally perform functions other than the call function, such as a game, without having to turn off the mobile terminal.

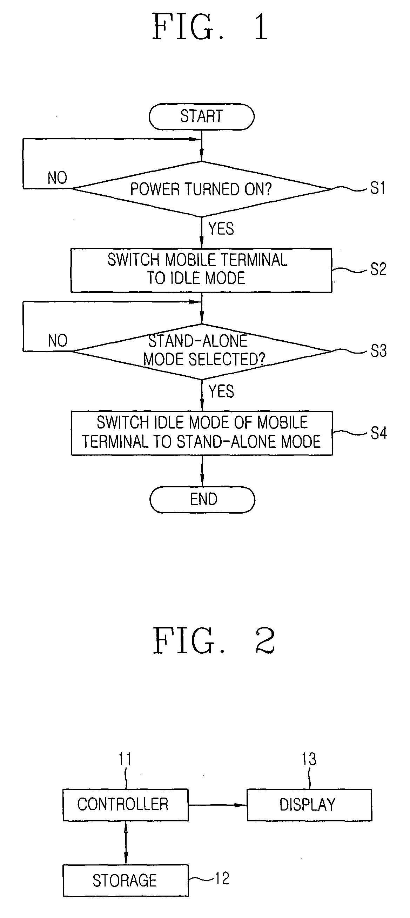

FIG. 1 illustrates a method for controlling a stand-alone mode of a mobile terminal in accordance with a related art. As illustrated in FIG. 1, when the mobile terminal is turned on (step S1), the mobile terminal is switched to an idle mode (step S2). When a user selects the stand-alone mode (step S3), the idle mode is switched to the stand-alone mode (step S4). Therefore, when a related art mobile terminal is turned on, the mobile terminal is always switched to the idle mode.

However, the related art mobile terminal has a disadvantage in that when the user replaces a battery of the mobile terminal in the stand-alone mode, the stand-alone mode is released. For example, when a user on board an airplane replaces the battery of the mobile terminal after the mobile terminal is switched to the stand-alone mode, the phone will ring if the mobile terminal receives a call signal, thereby putting the user in situation of receiving an undesired call.

### SUMMARY OF THE INVENTION

One object of the present invention is to provide a mobile terminal and method for continuously maintaining a stand-alone mode of a mobile terminal even when a battery of the mobile terminal replaced by a user after the mobile terminal is switched to the stand-alone mode. Another object of the present invention is to provide a mobile terminal and method for operating a function, such as an alarm or a scheduler, even when a user replaces a battery of a mobile terminal after the mobile terminal is switched to the stand-alone mode.

In one aspect of the present invention, an apparatus for controlling a stand-alone mode of a mobile terminal is provided. The apparatus includes a storage unit and a controller adapted to generate a control signal for setting the mobile terminal to a stand-alone mode and store the control signal in the storage unit, wherein the controller switches the mobile terminal to the stand-alone mode using the stored control signal when the mobile terminal is turned on,

It is contemplated that the apparatus further includes a display adapted to display a message indicating that the mobile terminal is switched to the stand-alone mode. It is further contemplated that the controller is further adapted to switch the mobile terminal to the stand-alone mode after time information is received from a base station.

It is contemplated that the controller is further adapted to switch the mobile terminal to the stand-alone mode if the time information is not received during a predetermined time. It is further contemplated that the controller is further adapted to generate a release signal for releasing the stand-alone mode when the user releases the stand-alone mode.

It is contemplated that the controller is further adapted to switch the mobile terminal to an idle mode using the release signal when the mobile terminal is turned back on after being turned off. It is further contemplated that controller is further adapted to store the release signal in the storage unit.

In another aspect of the present invention, a method for controlling a stand-alone mode of a mobile terminal is provided. The method includes generating and storing a control signal for setting a mobile terminal to a stand-alone mode and switching the mobile terminal to the stand-alone mode using the stored control signal when the mobile terminal is turned on.

It is contemplated that the method further includes switching the mobile terminal to the stand-alone mode when a user replaces a power source of the mobile terminal. It is further contemplated that switching the mobile terminal to the stand-alone mode comprises switching the mobile terminal to the stand-alone mode after receiving time information.

It is contemplated that the method further includes switching the mobile terminal to the stand-alone mode if the time information is not received during a predetermined time period. It is further contemplated that the method further includes generating and storing a release signal for releasing the stand-alone mode when the user releases the stand-alone mode. Preferably, the method further includes switching the mobile terminal to an idle mode using the stored release signal when the mobile terminal is turned on after being turned off.

In another aspect of the present invention, a method for controlling a stand-alone mode of a mobile terminal is provided. The method includes generating and storing a control signal for setting a mobile terminal to a stand-alone mode and switching the mobile terminal to the stand-alone mode using the stored control signal when the mobile terminal is turned on after either receiving time information or a predetermined time period.

It is contemplated that the method further includes switching the mobile terminal to the stand-alone mode when a user replaces a power source of mobile terminal. It is further contemplated that the method further includes generating and storing a release signal for releasing the stand-alone mode when the user releases the stand-alone mode. Preferably, the method further includes switching the mobile terminal to an idle mode using the stored release signal when the mobile terminal is turned on after being turned off.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention. Features, elements, and aspects of the invention that are referenced by the same numerals in different figures represent the same, equivalent, or similar features, elements, or aspects in accordance with one or more embodiments.

FIG. 1 is a flow chart illustrating a conventional method for controlling a stand-alone mode of a mobile terminal.

FIG. 2 is a schematic block diagram of an apparatus for controlling a stand-alone mode of a mobile terminal in accordance with one embodiment of the present invention; and

FIG. 3 is a flow chart illustrating a method for controlling a stand-alone mode of a mobile terminal in accordance with one embodiment of the present invention.

### DETAILED DESCRIPTION OF THE PREFERRED EMBODIMENTS

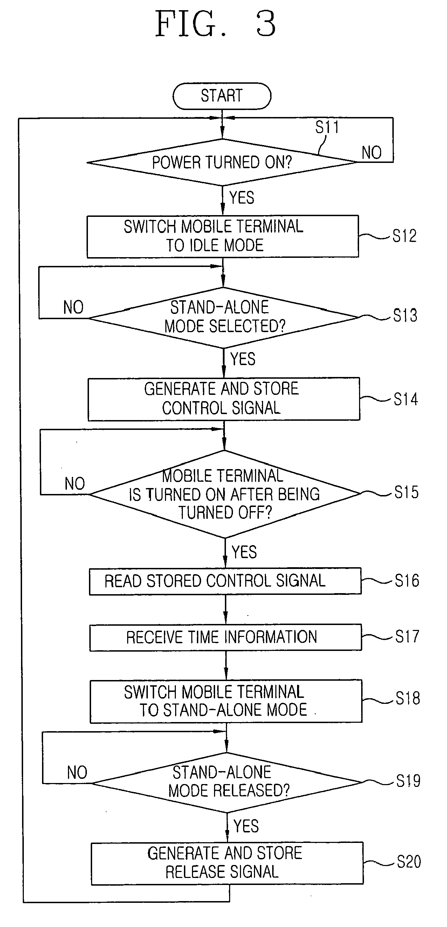

An apparatus and method in accordance with the present invention for controlling a stand-alone mode of a mobile terminal capable of continuously maintaining a stand-alone mode when a battery of the mobile terminal is replaced by a user after the mobile terminal is switched to the stand-alone mode will be described with reference to FIGS. 2 and 3.

FIG. 2 is a schematic block diagram showing the construction of an apparatus 1 for controlling a stand-alone mode of a mobile terminal in accordance with one embodiment of the present invention. As illustrated in FIG. 2, the apparatus 1 includes a controller 11 for generating a control signal for setting a mobile terminal to a stand-alone mode and a storage unit 12 for storing the control signal. When the mobile terminal is turned on after a user replaces the battery, the controller 11 switches the mobile terminal to the stand-alone mode. The controller 11 also displays a message on a display 13 indicating that the mobile terminal has been switched to the stand-alone mode based on the control signal.

As used herein, the "stand-alone mode" refers to a mode in which the user can cut off only a call signal of the mobile terminal, thereby allowing the user to still perform functions other than the call function, such as a game, without having to turn off the mobile terminal. The stand-alone mode may be utilized for example, when a user must turn off a mobile terminal, such as when the user is on board an airplane or when the user does not want to receive a call.

The operation of the apparatus 1 for controlling the stand-alone mode of the mobile terminal will now be described with reference to FIG. 3. FIG. 3 is a flow chart illustrating a method for controlling a stand-alone mode of a mobile terminal in accordance with one embodiment of the present invention.

As illustrated in FIG. 3, when the mobile terminal is turned on (step S11), the controller 11 switches the mobile terminal to an idle mode (step S12). Thereafter, the controller 11 checks whether the user selects the stand-alone mode (step S13). When the user selects the stand-alone mode, the controller generates a control signal for setting the stand-alone mode, stores the generated control signal in the storage unit 12 and switches the idle mode to the stand-alone mode (step S14).

If the mobile terminal in the stand-alone mode is turned on again after being turned off, such as when the battery of the mobile terminal is replaced (step S15), the controller 11 reads the control signal stored in the storage unit 12 and receives time information from an adjacent base station (not shown) based on the read control signal (step S17). Preferably the controller 11 displays a message on the display 13, the message based on the read control signal and indicating that the mobile terminal has been switched to the stand-alone mode.

When the mobile terminal is switched to the stand-alone mode immediately upon being turned on after the user replaces the battery of the mobile terminal, time information of the mobile terminal is not accurate due to a battery replacement time. Therefore, it is preferred that the mobile terminal is not switched to the stand-alone mode unit after the time information is received, since an alarm previously set by the user or a scheduler may be operated abnormally due to the inaccurate time information.

When the time information is received from the adjacent base station (S17), the controller 11 switches the mobile terminal to the stand-alone mode (step S18). Specifically, by receiving the time information from the adjacent base station (S17), the controller 11 can operate an alarm or scheduler function previously set by the user normally. If, however, the time information is not received from the adjacent base station during a pre-set time, for example, 20~30 seconds, the controller 11 preferably switches the mobile terminal to the stand-alone mode.

When the stand-alone mode is released by the user (step S19), the controller 11 generates a release signal for releasing the stand-alone mode, switches the stand-alone mode to an idle mode normally and stores the release signal in the storage unit 12 (step S20). When the mobile terminal is turned on again, the controller 11 switches the mobile terminal to the idle mode using the release signal stored in the storage unit 12.

The apparatus and method for controlling the stand-alone mode of the mobile terminal according to the present invention have many advantages. For example, when the user replaces the battery of the mobile terminal after the mobile terminal is switched to the stand-alone mode, the stand-alone mode can be continuously maintained. Accordingly, when the user replaces the battery of the mobile terminal after the mobile terminal is switched to the stand-alone mode, functions such as an alarm or scheduler can be operated normally.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims. Therefore, all changes and modifications that fall within the metes and bounds of the claims, or equivalence of such metes and bounds are therefore intended to be embraced by the appended claims.

## Claims

1. An apparatus for controlling a stand-alone mode of a mobile terminal comprising:
a storage unit; and
a controller adapted to generate a control signal for setting the mobile terminal to a stand-alone mode and store the control signal in the storage unit,
wherein the controller switches the mobile terminal to the stand-alone mode using the stored control signal when the mobile terminal is turned on,

2. The apparatus of claim 1, further comprising:
a display adapted to display a message indicating that the mobile terminal is switched to the stand-alone mode.

3. The apparatus of claim 1, wherein the controller is further adapted to switch the mobile terminal to the stand-alone mode after time information is received from a base station.

4. The apparatus of claim 3, wherein the controller is further adapted to switch the mobile terminal to the stand-alone mode if the time information is not received during a predetermined time.

5. The apparatus of claim 1, wherein the controller is further adapted to generate a release signal for releasing the stand-alone mode when the user releases the stand-alone mode.

6. The apparatus of claim 1, wherein the controller is further adapted to switch the mobile terminal to an idle mode using the release signal when the mobile terminal is turned back on after being turned off.

7. The apparatus of claim 6, wherein controller is further adapted to store the release signal in the storage unit.

8. A method for controlling a stand-alone mode of a mobile terminal, the method comprising:
generating and storing a control signal for setting a mobile terminal to a stand-alone mode; and
switching the mobile terminal to the stand-alone mode using the stored control signal when the mobile terminal is turned on.

9. The method of claim 8, further comprising switching the mobile terminal to the stand-alone mode when a user replaces a power source of the mobile terminal.

10. The method of claim 8, wherein switching the mobile terminal to the stand-alone mode comprises switching the mobile terminal to the stand-alone mode after receiving time information.

11. The method of claim 10, further comprising switching the mobile terminal to the stand-alone mode if the time information is not received during a predetermined time period.

12. The method of claim 8, further comprising:
generating and storing a release signal for releasing the stand-alone mode when the user releases the stand-alone mode.

13. The method of claim 12, further comprising switching the mobile terminal to an idle mode using the stored release signal when the mobile terminal is turned on after being turned off.

14. A method for controlling a stand-alone mode of a mobile terminal, the method comprising:
generating and storing a control signal for setting a mobile terminal to a stand-alone mode; and
switching the mobile terminal to the stand-alone mode using the stored control signal when the mobile terminal is turned on after either receiving time information or a predetermined time period.

15. The method at claim 14, further comprising:
switching the mobile terminal to the stand-alone mode when a user replaces a power source of mobile terminal.

16. The method at claim 14, further comprising:
generating and storing a release signal for releasing the stand-alone mode when the user releases the stand-alone mode.

17. The method of claim 16, further comprising:
switching the mobile terminal to an idle mode using the stored release signal when the mobile terminal is turned on after being turned off.
